# EUROPÄISCHE PATENTANMELDUNG

(11) **EP 4 663 323 A1**
(43) Veröffentlichungstag der Anmeldung: **17.12.2025**
(21) Anmeldenummer: 24182413.5
(22) Anmeldetag: 14.06.2024
(51) Int. Cl.: B21J 15/02, B21J 15/28, B23P 19/06, F16B 5/04, F16B 19/08, F16B 25/00

(54) **HERSTELLEN EINER VERBINDUNG ZWISCHEN WENIGSTENS EINEM WERKSTÜCK UND EINEM VERBINDUNGSELEMENT**

(71) Anmelder: Stöger Automation GmbH, 82549 Königsdorf (DE)
(72) Erfinder: FISCHHABER, Thomas, 83674 Gaißach (DE); RAAB, Alexander, 82538 Geretsried (DE)
(74) Vertreter: Paustian & Partner Patentanwälte mbB

(57) **Zusammenfassung**

Die Erfindung betrifft ein Verfahren (M1) zur Herstellung einer Verbindung zwischen wenigstens einem Werkstück (1a, 1b) und einem Verbindungselement (2) mittels eines Verbindungssystems (3). Das Verfahren (M1) weist die folgenden Schritte auf: Positionieren des Verbindungselements (2) an dem wenigstens einen Werkstück (1a, 1b), Aufbringen einer vorbestimmten axialen Anpresskraft auf das wenigstens eine Werkstück (1a, 1b) durch das Verbindungselement (2) und Herstellen der Verbindung durch das Verbindungselement (2) sowie ein Verbindungssystem (3) zur Durchführung des Verfahrens.

## Beschreibung

Die Erfindung betrifft ein Verfahren zum Herstellen einer Verbindung zwischen wenigstens einem Werkstück und einem Verbindungselement mittels eines Verbindungssystems sowie ein Verbindungssystem zum Durchführen eines solchen Verfahrens.

Aus dem Stand der Technik sind Verfahren und Verbindungssysteme zum Verbinden von wenigstens einem Werkstück mit einem Verbindungselement bekannt, bei denen zum Verbinden hohe Anpresskräfte zwischen dem Verbindungselement und dem wenigstens einen Werkstück bzw. zwischen mehreren Werkstücken untereinander erforderlich sind.

Ein Beispiel für ein solches Verfahren ist das Fließlochschrauben, das beispielsweise bei Werkstücken aus hochfesten Stahlwerkstoffen verwendet wird. Bei einem beispielhaften Verfahren aus dem Stand der Technik wird als Verbindungselement eine selbstformende Schraube eingesetzt. Diese Schraube wird von einem Schraubwerkzeug geführt, welches in einem Verbindungssystem an einer Führungseinrichtung wie einem Industrieroboter, beispielsweise an einem Gelenkarmroboter, montiert ist. Die Schraube wird zu Beginn des Verfahrens auf einem Werkstück positioniert, eine Anpresskraft aufgebracht und dabei gegebenenfalls eine Rotation der Schraube um ihre Schraubachse eingeleitet. Da für selbstformende Schrauben üblicherweise keine Bohrungen oder sonstige Aussparungen in den zu verbindenden Werkstücken vorgesehen sind, sind hohe Anpresskräfte, beispielsweise bis zu 3.000 N an dem Schraubwerkzeug bzw. an der selbstformenden Schraube erforderlich. Durch die Anpresskraft insbesondere in Verbindung mit einer Rotation der Schraube wird diese in das Werkstück eingebracht. Nachdem die Spitze der selbstformenden Schraube in das Werkstück eingedrungen ist, formt sie ein sogenanntes Kernloch aus. Hierbei wird durch die Rotation der Schraube ein Gewinde in dem Werkstück bzw. bei Verbindung mehrerer Werkstücke in wenigstens einem der Werkstücke erzeugt. Abschließend wird die Schraube in dem im ersten Schritt erzeugten Gewinde festgedreht, insbesondere bis ein vorgegebenes Anzugsdrehmoment erreicht ist.

Weitere Beispiele für hier betrachtete Verbindungsverfahren sind Nietverfahren, insbesondere das Stanznieten und das Bolzensetzen. Bei diesen Verfahren wird als Verbindungselement beispielsweise ein Niet oder ein Bolzen eingesetzt. Das Verbindungselement wird dabei ebenfalls unter Aufbringung insbesondere hoher Anpresskräfte, jedoch für gewöhnlich ohne Rotation des Verbindungselements in das Werkstück bzw. in die Werkstücke eingebracht. Optional kann nach dem Einbringen des Verbindungselements ein Ende oder beide Enden des Verbindungselements umgeformt werden, beispielsweise zur Fertigung eines Schließkopfes bei einem Niet.

Nachteilig bei den aus dem Stand der Technik bekannten Verfahren ist, dass die Führungseinrichtung der Verbindungseinheit infolge großer Anpresskräfte hohe Kräfte aufnimmt und dabei vergleichbar zu einer Feder gespannt wird. Überwindet das Verbindungselement beim Verbindungsvorgang einen insbesondere durch das Werkstück gebildeten Widerstand, so wird es durch die Anpresskräfte häufig beschleunigt, so dass es insbesondere unvermittelt einen Weg gegenüber dem Werkstück zurücklegt. Hierbei federt die Führungseinrichtung nach bzw. zurück und das Verbindungselement wird mit (zu) hoher Anpresskraft auf das Werkstück gepresst bzw. durchdringt bei entsprechenden Ausführungsformen mit insbesondere unerwünscht hoher Geschwindigkeit das Werkstück. Daraus resultiert häufig eine minderwertige Verbindung des wenigstens einen Werkstücks mit dem Verbindungselement bzw. mehrerer Werkstücke miteinander. Insbesondere kann hierdurch eine unerwünschte Verformung an dem Verbindungselement oder (dem) wenigstens einen Werkstück entstehen. Bei gewindeformenden Verbindungselementen wie Schrauben kann das Verbindungselement, das von dem rückfedernden Verbindungssystem zu stark auf bzw. durch das Werkstück gepresst wird, kein (geeignetes) Gewinde in das Werkstück schneiden. Eine qualitativ hochwertige, sichere und dauerfeste Verbindung des Verbindungselements mit dem Werkstück bzw. der Werkstücke untereinander ist aufgrund der vorbeschriebenen Randbedingungen schwer umsetzbar.

Aufgabe der Erfindung ist es daher, die vorgenannten Nachteile zu überwinden und ein Verfahren anzugeben, mittels welchem eine sichere und dauerfeste Verbindung eines Verbindungselements mit wenigstens einem Werkstück hergestellt werden kann.

Diese Aufgabe wird durch ein Verfahren gelöst, welches die folgenden Schritte umfasst:
a) Positionieren des Verbindungselements an einem Werkstück,
b) Positionieren eines Niederhalters an dem Werkstück und Aufbringen einer vorbestimmten Niederhaltekraft,
c) Aufbringen einer vorbestimmten Anpresskraft auf das wenigstens eine Werkstück durch das Verbindungselement, wobei die Niederhaltekraft und die Anpresskraft entlang parallel zueinander angeordneter Achsen wirken,
d) abruptes Verringern der Anpresskraft bei Eintritt eines vorbestimmten Ereignisses, wobei die Anpresskraft auf einen vorbestimmten Wert verringert wird,
e) Erhöhen der Niederhaltekraft bei Eintritt des vorbestimmten Ereignisses, wobei die Niederhaltekraft derart erhöht wird, dass die Summe aus Anpresskraft und Niederhaltekraft nach Eintritt des vorbestimmten Ereignisses im Wesentlichen der Summe aus Anpresskraft und Niederhaltekraft vor Eintritt des vorbestimmten Ereignisses entspricht,
f) Herstellen der Verbindung durch das Verbindungselement.

Ein beispielhaftes Verfahren kann mit einem Verbindungssystem mit einer Verbindungseinheit und einer Führungseinrichtung wie insbesondere einem Industrieroboter, beispielsweise einem Gelenkarmroboter, durchgeführt werden. Das Verbindungselement kann dabei an einem Verbindungswerkzeug der Verbindungseinheit angeordnet sein und die Verbindungseinheit an einer Aufnahme der Führungseinrichtung angeordnet sein. Das vorgeschlagene Verfahren ist nicht auf die für die Formulierung des Anspruchs gewählte Reihenfolge der einzelnen Schritte beschränkt. Viel mehr definiert der Anspruch die Erfindung für jede geeignete Reihenfolge der angegebenen Schritte.

In einem solchen Verfahren wird das Verbindungselement an einem von gegebenenfalls mehreren zu verbindenden Werkstücken positioniert. Hierbei kann beispielsweise die gesamte Verbindungseinheit durch die Führungseinrichtung derart positioniert werden, dass das Verbindungselement an dem Werkstück anliegt. Das Verbindungselement kann insbesondere an einem Verbindungswerkzeug, beispielsweise an einem Schraubwerkzeug, angeordnet sein. Das Verbindungswerkzeug kann in einem Werkzeughalter an der Verbindungseinheit angeordnet sein. Es ist möglich, dass sowohl an der Verbindung zwischen Führungseinrichtung und Verbindungseinheit als auch an wenigstens einer der Verbindungen zwischen Verbindungseinheit und Werkzeughalter sowie Werkzeughalter und Verbindungswerkzeug wenigstens ein weiteres insbesondere motorisch ansteuerbares Gelenk vorgesehen ist.

Gleichzeitig oder zeitlich vor- oder nachgelagert zur Positionierung des Verbindungselements wird ein Niederhalter an dem Werkstück positioniert und eine Niederhaltekraft aufgebracht. Der Niederhalter ist insbesondere ebenfalls an der Verbindungseinheit angeordnet. Als Niederhalter wird dabei eine Einrichtung des Verbindungssystems bezeichnet, welche eine Niederhaltekraft auf das wenigstens eine Werkstück aufbringt, um das wenigstens eine Werkstück zu fixieren und bei zwei oder mehreren aneinander angeordneten Werkstücken, diese zum Ausbilden einer geeigneten Verbindung aneinander zu pressen und dabei auch zu fixieren. Die Niederhaltekraft wirkt dabei parallel zur Anpresskraft. Entsprechend wirken die Niederhaltekraft und die Anpresskraft entlang parallel zueinander angeordneter Achsen, insbesondere in Richtung der Achse des Verbindungselements. Eine gleichzeitig zur Positionierung des Niederhalters oder hierzu nachgelagerte Positionierung des Verbindungselements liegt beispielsweise bei einer Ausführung vor, bei welcher das Verbindungselement im Niederhalter angeordnet und/ oder mithilfe des Niederhalters geführt ist und somit gleichzeitig mit diesem oder folgend an dem wenigstens einen Werkstück positioniert wird.

Nachfolgend wird die Anpresskraft auf das wenigstens eine Werkstück durch das Verbindungselement aufgebracht. Mittels dieser Anpresskraft dringt das Verbindungselement in das Werkstück bzw. in die Werkstücke ein bzw. wird in diese eingebracht. Die Anpresskraft kann dabei beispielsweise mittels eines Linearantriebs aufgebracht werden.

Bei Eintritt eines vorbestimmten Ereignisses wird die Anpresskraft abrupt reduziert. Das vorbestimmte Ereignis hängt insbesondere von der Verbindungsart ab und kann beispielsweise das Eindringen in wenigstens ein Werkstück sein, beispielsweise in das oberste dem Verbindungssystem zugewandte Werkstück, oder das Eindringen in wenigstens einen Werkstückbereich, der dem Verbindungselement einen geringeren Widerstand entgegen bringt, beispielsweise durch den Werkstoff oder eine bereits bestehende Ausnehmung, oder das vollständige Durchdringen des Verbindungselements durch wenigstens ein Werkstück sein, welches dem Verbindungselement einen größeren Widerstand entgegensetzt. Ebenso kann auch das Verbindungselement eine Gestaltung aufweisen, welche abhängig von einer vorbekannten Relativbewegung gegenüber dem wenigstens einen Werkstück bei konstanter Anpresskraft eine insbesondere unerwünschte Beschleunigung des Verbindungselements bedingt und damit wenigstens ein Auslöser eines vorbestimmten Ereignisses sein kann. Das vorbestimmte Ereignis zeichnet sich dadurch aus, dass bei dessen Eintreten eine meist abrupte Änderung des der Vorschubbewegung des Verbindungselement entgegenwirkenden Widerstands eintritt. Abhängig vom Verbindungsvorgang kann das vorbestimmt Ereignis auch eine Kombination von zwei oder mehrerer Ereignisse sein, welche zusammen zu einer meist abrupten Änderung des der Vorschubbewegung des Verbindungselement entgegenwirkenden Widerstands führen.

Das vorbestimmte Ereignis definiert entsprechend ein Ereignis im Ablauf des Verbindungsverfahrens, bei dessen Eintreten eine Änderung der Anpresskraft zwischen dem Verbindungselement und dem wenigstens einen Werkstück erforderlich ist, um eine qualitativ hochwertige, sichere und dauerfeste Verbindung herzustellen. Wird beim Eintreten des Ereignisses die Anpresskraft nicht reduziert, so dringt das Verbindungselement beispielsweise zu tief in das wenigstens eine Werkstück ein oder durchdringt in unerwünschter Weise wenigstens ein Werkstück, da beispielsweise die Widerstandskraft des wenigstens einen Werkstücks und/ oder des Verbindungselements ab Eintritt des vorbestimmten Ereignisses (wesentlich) geringer ist als zuvor. Entsprechend wird die vom Verbindungssystem aufgebrachte Anpresskraft insbesondere abrupt auf einen geringeren Wert reduziert, welcher insbesondere abhängig von der Ausführung der vorliegend herzustellenden Verbindung auszuwählen ist.

Gleichzeitig, also bei Eintreten des vorbestimmten Ereignisses, wird die Niederhaltekraft erhöht. Durch das Erhöhen der Niederhaltekraft wird ein Zurückfedern der Führungseinrichtung und damit auch des Verbindungselements verhindert. Insofern können die durch die Führungseinrichtung auf das Verbindungselement ausgeübten Rückstellkräfte durch den Niederhalter bzw. durch die Niederhaltekraft ausgeglichen werden. In anderen Worten verhält sich das System bei dem vorgeschlagenen Verfahren ähnlich zu einem starren System. Die Erhöhung der Niederhaltekraft kann beispielsweise mittels einem Niederhalteraktuator, beispielsweise hydraulisch oder elektromotorisch erfolgen oder mittels einer mechanischen, insbesondere formschlüssigen Kopplung des Niederhalters, welche bei einem Rückfedern der Führungseinrichtung einrastet und einem Rückfedern die entsprechende Niederhaltekraft entgegensetzt. Ein solcher einem Rückfedern des Verbindungssystems starr entgegenstehender Niederhalter wandelt insofern die Rückstellkraft der Führungseinrichtung in eine Niederhaltekraft um, deren Wert insbesondere der Summe aus Anpresskraft und Niederhaltekraft unmittelbar vor Eintritt des vorbestimmten Ereignisses entspricht. Hierdurch wird eine aus der Vorspannung der Führungseinrichtung resultierende, unerwünschte Relativbewegung zwischen dem Verbindungselement und dem wenigstens einen Werkstück verhindert. Auch bei Ausführungsformen, bei welchen eine Erhöhung der Niederhaltekraft mittels eines Niederhalteraktuators erfolgt, wird die Niederhaltekraft auf einen Wert erhöht, welcher insbesondere der unmittelbar vor dem vorbestimmten Ereignis aufgebrachten Anpresskraft entspricht. Durch einen Verfahrensschritt, bei welchem sich die Niederhaltekraft derart erhöht bzw. erhöht wird, dass die Summe aus Anpresskraft und Niederhaltekraft nach Eintritt des vorbestimmten Ereignisses im Wesentlichen der Summe aus Anpresskraft und Niederhaltekraft vor Eintritt des vorbestimmten Ereignisses entspricht, kann das System aus Werkstück(en), Niederhalter, Verbindungselement und Führungseinrichtung in einem Kräftegleichgewicht bleiben. Es erfolgt daher kein unerwünschtes Rückfedern der Führungseinrichtung und insbesondere werden keine erhöhten Kräfte auf das wenigstens eine Werkstück aufgebracht oder dringt das Verbindungselement nicht zu stark in das wenigstens eine Werkstück ein bzw. durch dieses hindurch.

Abschließend kann eine sichere und dauerfeste Verbindung des Verbindungselements mit dem Werkstück bzw. mit den Werkstücken hergestellt werden. Dabei ist abhängig von der hergestellten Verbindung meist eine weitere Relativbewegung des Verbindungselements gegenüber dem wenigstens einen Werkstück erforderlich, in dessen Zuge beispielsweise eine Verbindungsöffnung, insbesondere mit einem Gewinde ausgebildet wird und/ oder ein Einschrauben in ein Gewinde erfolgt und/ oder eine Verformung des Verbindungselements an wenigstens einem Ende des Verbindungselements erfolgt.

Abhängig von der Ausführungsform des Verfahrens bzw. der hergestellten Verbindung kann nach dem abrupten Verringern der Anpresskraft und dem Erhöhen der Niederhaltekraft der Verbindungsvorgang auch fortgesetzt werden, indem gemäß den Schritten b) und c) eine vorbestimmte Niederhaltekraft sowie eine vorbestimmte Anpresskraft entlang parallel zueinander angeordneter Achsen aufgebracht wird. Die Bezeichnung der Schritte mit Buchstaben in der vorliegenden Beschreibung des Verfahrens einschließlich der verschiedenen Ausführungsformen soll keinen vorbestimmten Ablauf mit insbesondere definierter Reihenfolge der jeweiligen Schritte definieren, sondern lediglich der Strukturierung und der besseren Nachvollziehbarkeit dienen.

Im Rahmen des vorgeschlagenen Verfahrens kann ein Verbindungselement beispielsweise als Schraube, insbesondere als selbstformende Schraube, als Niet, beispielsweise als Halbhohlstanzniet, als Bolzen oder weiteres, hier nicht explizit genanntes Verbindungselement ausgebildet sein. Insofern kann unter dem Begriff Verbindungselement ein Mittel zum Herstellen einer formschlüssigen und/ oder kraftschlüssigen Verbindung zwischen diesem und wenigstens einem Werkstück verstanden werden. Ein Verbindungselement kann beispielsweise aus Metall wie Stahl, Aluminium oder Edelstahl ausgebildet sein. Ebenso kann ein Verbindungselement beispielsweise auch aus einem geeigneten Kunststoff ausgebildet sein. Es ist ebenfalls möglich, dass ein Verbindungselement beispielsweise langgestreckt ausgebildet ist und zwei Enden aufweist, wobei wenigstens eines der zwei Enden als vorgefertigter Setzkopf oder zur Umformung als Schließkopf ausgebildet ist.

Ein Werkstück kann beispielsweise als Blech oder als flächiges Werkstück ausgebildet sein und beispielsweise Metall, Stahl oder Edelstahl umfassen. Ein Werkstück kann ebenfalls als Profil oder als Strebe ausgebildet sein. Gleichfalls können mit dem vorgeschlagenen Verfahren Werkstücke aus jedem geeigneten Werkstoff, Form oder Farbe mit bzw. mittels einem Verbindungselement verbunden werden.

Zum Herstellen der Verbindung wird ein Verbindungselement insbesondere mit einem seiner Enden, beispielsweise einem spitz zulaufenden Ende an einem Werkstück angesetzt. Beispielsweise kann das Verbindungselement mittels dem erfindungsgemäßen Verfahren mit diesem Werkstück verbunden werden oder aber das Verbindungselement kann zwei oder mehr übereinander angeordnete Werkstücke miteinander verbinden. Beispielsweise können zwei Metallbleche übereinander angeordnet sein und das Verbindungselement kann auf dem zuoberst angeordneten Blech positioniert werden. Es ist ebenfalls möglich, dass wenigstens ein Werkstück eine Aussparung für das Verbindungselement aufweist. Bei einer derartigen Ausgestaltung kann das Verbindungselement durch eine im diesem zugewandten (oberen) Werkstück angeordnete Aussparung hindurchgeführt und auf dem darunter liegenden Werkstück positioniert werden. Nach der Durchführung des Verfahrens kann das Verbindungselement dann in das zweite Werkstück eingebracht sein und das obere Werkstück mit dem darunter liegenden Werkstück beispielsweise über den Rand der Aussparung mittels eines Kopfs verbinden, beispielsweise mittels eines Schraubenkopfs. Das Verbindungselement, beispielsweise ein Niet, muss nicht vollständig durch ein Werkstück oder mehrere Werkstücke hindurch eingebracht werden. Beispielsweise kann ein Niet, insbesondere ein Halbhohlstanzniet, in ein Werkstück oder mehrere Werkstücke eingebracht werden und sich dabei verformen, beispielsweise spreizen, wodurch die Verbindung hergestellt wird.

Ein Niederhalter kann beispielsweise einen Niederhalterkopf und einen Aktuator aufweisen und so beispielsweise zweiteilig ausgebildet sein. Ein Aktuator kann entsprechend auch als Niederhalteraktuator bezeichnet werden. Ein Niederhalterkopf wird bei dem vorgeschlagenen Verfahren auf einem Werkstück positioniert und mittels des Niederhalteraktuators wird durch den Niederhalterkopf eine Niederhaltekraft auf das wenigstens eine Werkstück aufgebracht. Ein Niederhalteraktuator kann beispielsweise mit einer pneumatischen, hydraulischen oder elektromotorischen Funktionsweise ausgebildet sein. Der Niederhalter kann an einer Führungseinrichtung, beispielsweise einem Industrieroboter des Verbindungssystems befestigt sein. Insbesondere kann der Niederhalteraktuator an einer Führungseinrichtung des Verbindungssystems befestigt sein. Weiterhin kann ein Niederhalter auch als mechanische Komponente, beispielsweise umfassend wenigstens eine Federeinrichtung, mit einer Rückfedersicherung ausgebildet sein. Ein Niederhalteraktuator kann in diesem Falle beispielsweise als Rückfedersicherung ausgebildet sein. Insofern kann bei einer Verfahrbewegung der Führungseinrichtung der Niederhalter gestaucht werden und dadurch entsprechend seiner Federkraft und dem Verfahrweg eine Niederhaltekraft aufbringen. Bei einem plötzlichen Rückfedern der Führungseinrichtung, also bei einem abrupten Anstieg der Verfahrgeschwindigkeit des Verbindungselements, kann die Rückfedersicherung einrasten, wodurch der Niederhalter zu einem starren Bauteil wird, bzw. den Abstand zwischen dem Verbindungselement und dem wenigstens einen Werkstück wenigstens kurzzeitig gewährleistet. In anderen Worten verhindert der Niederhalter, dass ein Nachfedern der Führungseinrichtung das Verbindungselement in unerwünschter Weise in Richtung des Werkstücks beschleunigt.

Die Niederhaltekraft kann aufgebracht werden, bevor die Anpresskraft aufgebracht wird. Dadurch kann das Werkstück einerseits fixiert werden und andererseits können mögliche Abstände zwischen zwei oder mehreren übereinander angeordneten Werkstücken reduziert werden.

Die Anpresskraft des Verbindungselements auf das Werkstück kann beispielsweise mittels eines Linearantriebs aufgebracht werden. Ein solcher Linearantrieb kann beispielsweise an einer Verbindungseinheit und dabei mittelbar an einer Führungseinrichtung angeordnet sein. Ein Linearantrieb kann beispielsweise eine pneumatische, hydraulische oder elektromotorische Funktionsweise aufweisen. Mittels dieser Anpresskraft kann das Verbindungselement in das wenigstens eine Werkstück eingebracht werden. Die Anpresskraft wirkt dabei insbesondere in Richtung der Längsachse des Verbindungselements, so insbesondere bei einer Ausgestaltung des Verbindungselements als Schraube in Richtung der Schraubachse, insbesondere in Richtung eines spitz zulaufenden Endes der Schraube. Das Verbindungselement und der Niederhalter sind dabei so angeordnet bzw. eingerichtet, dass die Anpresskraft des Verbindungselements parallel zur Niederhaltekraft wirkt. Entsprechend wirken die Niederhaltekraft und die Anpresskraft entlang parallel zueinander angeordneter Achsen. Bei besonderen Ausführungsformen können die Achsen der Niederhaltekraft und der Anpresskraft auch räumlich übereinstimmend angeordnet sein.

Zum Erkennen des vorbestimmten Ereignisses und somit zum Auslösen einer Verringerung der Anpresskraft bzw. eines Erhöhens der Niederhaltekraft ist beispielsweise eine Ermittlung der anliegenden Anpresskraft mittels Sensoren oder Berechnungen ausgehend von Betriebsdaten wenigstens eines Aktuators des Verbindungssystems möglich.

Ein Erkennen eines vorbestimmten Ereignisses ist beispielsweise mithilfe einer Ermittlung des zurückgelegten Wegs des Verbindungselements gegenüber dem wenigstens einen Werkstück möglich. Beispielsweise kann das vorbestimmte Ereignis, bei dessen Eintreten ein abruptes Verringern der Anpresskraft unter gleichzeitiger Erhöhung der Niederhalterkraft erforderlich ist, um eine geeignete Verbindungsqualität zu erreichen, durch eine Veränderung der Bewegungsgeschwindigkeit oder aufgrund einer Beschleunigung oder Verzögerung des Verbindungselements erkannt werden.

Ebenfalls ist es möglich, dass das Eintreten des vorbestimmten Ereignisses anhand eines Sensors erkannt wird, welcher die anliegende Anpresskraft unmittelbar erfasst. Beispielsweise entsteht in dem Moment, in welchem das Verbindungselement in das Werkstück eindringt, zumindest kurzfristig ein Absinken der anliegenden Anpresskraft. Insofern kann auch durch Ermitteln eines solchen Absinkens der Anpresskraft der Eintritt des vorbestimmten Ereignisses erkannt oder insbesondere in Kombination mit wenigstens einem weiteren erfassten oder festgelegten Wert wie beispielsweise ein hierauf folgend zurückgelegter Weg des Verbindungselements oder ein hierauf folgender zeitlicher Abstand zum Eintreten des vorbestimmten Ereignisses bestimmt werden. Eine Ermittlung des Ereignisses kann bei einer mechanischen Ausgestaltung des Niederhalters beispielsweise auch rein mechanisch durch eine Rückfedersicherung geschehen. Dabei wird von der Rückfedersicherung des Niederhalters eine der Rückfederung entgegenwirkende Kraft aufgebracht, welche im Wesentlichen der Summe aus Anpresskraft und Niederhaltekraft vor Eintritt des vorbestimmten Ereignisses entspricht.

Die Verbindung mittels eines als Niet oder als Bolzen ausgebildeten Verbindungselements kann dadurch hergestellt werden, dass der Bolzen oder der Niet wenigstens teilweise oder vollständig in das wenigstens eine Werkstück eingebracht wird. Bei einem als selbstformende Schraube ausgebildeten Verbindungselement kann mittels einer Rotation der Schraube ein Gewinde in dem Werkstück bzw. in den Werkstücken geschnitten werden. Abschließend kann die Schraube in diesem Gewinde insbesondere bis zu einem gewünschten Drehmoment angezogen werden.

Der Niederhalter kann im Schritt b) derart positioniert werden, dass das wenigstens eine Werkstück sandwichartig zwischen dem Niederhalter und einem Auflageelement angeordnet ist. Durch eine derartige Positionierung des Niederhalters auf einem Auflageelement kann insbesondere ein Verbiegen oder Verziehen des wenigstens einen Werkstücks durch den Niederhalter bzw. durch die aufgebrachte Niederhalterkraft vermieden werden. Insofern kann die Niederhalterkraft mittelbar auf das Auflageelement wirken. In anderen Worten können Auflageelement und Niederhalter übereinander bzw. aufeinander liegen und nur durch das wenigstens eine Werkstück voneinander getrennt sein. Dabei drückt der Niederhalter mit der Niederhaltekraft mittelbar über das wenigstens eine Werkstück auf das Auflageelement, sodass das wenigstens eine Werkstück fixiert, aber nicht durch den Niederhalter verformt wird. Ein Auflageelement kann insbesondere flächig ausgeführt sein. Weiterhin kann ein Auflageelement beispielsweise an der Verbindungseinheit eines Verbindungssystems angeordnet sein und zusammen mit dem Verbindungselement verfahren bzw. bewegt werden.

In einem Beispiel kann ein Auflageelement zudem ein Gegenstück für das Verbindungselement sein oder ein Gegenstück für das Verbindungselement in insbesondere geeigneter Position gegenüber einem am Auflageelement anliegenden Werkstück aufnehmen. Insofern kann ein Gegenstück beispielsweise zur Endformgebung des Verbindungselements dienen. Ein Gegenstück kann von einem Gegenhalter oder Nietkopfsetzer oder Schließkopfformer oder einem anderen zum Herstellen der Verbindung geeigneten Element gebildet werden. Zur Endformgebung des Verbindungselements wird beispielsweise das Ausformen eines Niets zur formschlüssigen Verbindung bzw. Sicherung des Niets mit dem Werkstück verbunden. In anderen Worten kann ein Gegenstück zur Endformgebung beispielsweise ein Ende eines Niets ausformen, beispielsweise einen Schließkopf. Ein derartiges Gegenstück kann beispielsweise auf der dem Verbindungselement gegenüberliegenden Seite des wenigstens einen Werkstücks angeordnet sein. Das Gegenstück kann weiterhin derart angeordnet sein, dass bei einem Durchdringen des Verbindungselements insbesondere aller von wenigstens einem Werkstück das Verbindungselement unmittelbar auf das Gegenstück trifft.

Ein Verbindungselement kann in wenigstens einem der Schritte c) und f) mittels eines Linearantriebs insbesondere axial verlagert werden. Ein Verbindungselement kann auch in beiden Schritten c) und f) mittels eines Linearantriebs insbesondere axial verlagert werden. Ein solcher Linearantrieb kann beispielsweise an einer Verbindungseinheit oder zwischen einer solchen und einer Führungseinrichtung angeordnet sein. Ein Linearantrieb kann beispielsweise eine pneumatische, hydraulische oder elektromotorische Funktionsweise aufweisen. Mittels des Linearantriebs kann eine Anpresskraft insbesondere auf das Verbindungselement und/ oder auf einen Niederhalter aufgebracht werden. Mittels dieser Anpresskraft kann das Verbindungselement in das Werkstück bzw. in die Werkstücke eingebracht werden. Weiterhin kann mittels eines derartigen Linearantriebs ein Verbindungselement insbesondere axial verlagert werden und dabei in das wenigstens eine Werkstück eingebracht werden, ohne hierfür die Verbindungseinheit oder die Führungseinrichtung verfahren zu müssen. Insofern kann die Verbindungseinheit quasi-starr gegenüber dem wenigstens einen Werkstück angeordnet sein und das Verbindungselement gleichzeitig in das wenigstens eine Werkstück eingebracht werden. Weiterhin kann mithilfe eines derartigen Linearantriebs auch der zurückgelegte Weg des Verbindungselements gegenüber dem wenigstens einen Werkstück ermittelt werden.

Ein Verbindungselement kann in wenigstens einem der Schritte c) und f) mittels eines Rotationsantriebs um seine Rotationsachse rotiert werden. Insbesondere kann ein Verbindungselement auch in beiden Schritten c) und f) mittels eines Rotationsantriebs um seine Rotationsachse rotiert werden. Beispielsweise kann bei einem als selbstformende Schraube ausgebildeten Verbindungselement mittels einer Rotation der Schraube um ihre Rotationsachse ein Gewinde in dem wenigstens einen Werkstück geschnitten werden. Durch die Anpresskraft und durch die Rotation der Schraube wird die Schraube in das wenigstens eine Werkstück eingebracht. Nachdem die Spitze der selbstformenden Schraube in das Werkstück eingedrungen ist, formt sie ein Kernloch. Hierbei wird durch die Rotation der Schraube ein Gewinde in dem Werkstück erzeugt. Abschließend kann die Schraube mittels der Rotation in diesem Gewinde bis zu einem gewünschten Drehmoment angezogen werden. Ein Rotationsantrieb kann beispielsweise an einer Verbindungseinheit oder zwischen einer solchen und einer Führungseinrichtung angeordnet sein. Ein Rotationsantrieb kann beispielsweise eine pneumatische, hydraulische oder elektromotorische Funktionsweise aufweisen. Weiterhin ist mittels eines derartigen Rotationsantriebs die Rotationsgeschwindigkeit bzw. die Drehzahl des rotierenden Verbindungselements ermittelbar.

Während der Durchführung wenigstens eines der Schritte des Verfahrens kann in einem weiteren Schritt g1) die Anpresskraft und/ oder ein vom Verbindungselement gegenüber dem wenigstens einen Werkstück zurückgelegter Weg mittels wenigstens einem hierzu am Verbindungssystem vorgesehenen Sensors, und/ oder mittels Berechnung aus an dem die Anpresskraft aufbringenden Aktuator verfügbaren Werten und/ oder in einem weiteren Schritt g2) die Niederhaltekraft und/ oder der vom Niederhalter gegenüber dem Verbindungssystem zurückgelegte Weg mittels wenigstens einem hierzu am Verbindungssystem vorgesehenen Sensors, und/ oder mittels Berechnung aus an dem die Niederhaltekraft aufbringenden Niederhalteraktuator verfügbaren Werten ermittelt werden.

Durch eine derartige Ermittlung der Anpresskraft bzw. der Niederhaltekraft kann einerseits der Eintritt des vorbestimmten Ereignisses erfasst bzw. erkannt werden und andererseits die Anpresskraft und/ oder die Niederhalterkraft angepasst bzw. geregelt werden. Zum Erkennen des Eintritts des vorbestimmten Ereignisses und somit zum Auslösen des Verringerns der Anpresskraft bzw. des Erhöhens der Niederhaltekraft ist beispielsweise eine Ermittlung der anliegenden Anpresskraft mittels Sensoren oder Berechnungen anhand von an dem wenigstens einen Aktuator verfügbaren Werten möglich. Weiterhin kann das vorbestimmte Ereignis durch eine Veränderung eines zurückgelegten Wegs des Verbindungselements gegenüber dem wenigstens einem Werkstück, insbesondere durch Erreichen einer vorbestimmten Wegstrecke erkannt werden. Der zurückgelegte Weg des Verbindungselements kann ebenfalls mittels eines Sensors, beispielsweise einer Kamera oder Lichtschranke, insbesondere Lasererfassung, oder aber mittels Berechnung unter Verwendung von an wenigstens einem Aktuator verfügbaren Werten ermittelt werden. Insofern kann der zurückgelegte Weg des Verbindungselements oder mittelbar der zurückgelegte Weg einer Aufnahme des Verbindungselements beispielsweise durch Berechnungen mithilfe von am entsprechenden Aktuator, beispielsweise eines Linearantriebs verfügbaren Werten ermittelt werden. Auf dieselbe Art und Weise kann insbesondere auch der von dem Niederhalter zurückgelegte Weg ermittelt werden. Bei der entsprechenden Ausführung wird in dem Moment, in welchem das vorbestimmte Ereignis eintritt, der zurückgelegte Weg des Verbindungselements dem vorbestimmten Weg entsprechen, welcher beispielsweise anhand von Erfahrungswerten oder Versuchsreihen festgelegt und damit vorbestimmt wird. Ebenfalls ist es möglich, dass das Eintreten des vorbestimmten Ereignisses anhand wenigstens eines Sensors erkannt wird, welcher die anliegende Anpresskraft misst. So kann ein Eintreten des vorbestimmten Ereignisses der Moment sein, in welchem zum Beispiel aufgrund eines Eindringen des Verbindungselements in das Werkstück zumindest kurzfristig ein Absinken der anliegenden Anpresskraft resultiert. Insofern kann auch durch Ermitteln eines solchen Absinkens der Anpresskraft der Eintritt des vorbestimmten Ereignisses erkannt werden.

Zur Regelung der Niederhalterkraft auf einen vorbestimmten Wert kann es ebenfalls von Vorteil sein, die tatsächlich anliegende Niederhalterkraft mittels eines Sensors zu messen bzw. zu erfassen. Beispielsweise kann hierzu ein Kraftsensor verwendet werden. Ein solcher Sensor besteht beispielsweise aus einem Wandler, der die Kraft in ein elektrisches Signal umwandelt. Der Sensor kann beispielsweise in den Aktuator, also den Niederhalteraktuator an einem Kraftausübungspunkt integriert werden. Wenn der Niederhalteraktuator eine Niederhaltekraft ausübt, erfasst der Sensor die Größe der Niederhaltekraft und kann ein entsprechendes elektrisches Signal ausgeben.

Weiterhin kann das Verfahren wenigstens einen der folgenden Schritte umfassen:
h1) Regeln der Anpresskraft abhängig von ermittelten Werten der Anpresskraft bzw. ermittelten Werten des zurückgelegten Wegs des Verbindungselements mittels einer hierzu am Verbindungssystem vorgesehenen Regeleinrichtung, und/ oder
h2) Regeln der Niederhaltekraft und/ oder den vom Niederhalter zurückgelegten Weg abhängig von ermittelten Werten der Niederhaltekraft bzw. ermittelten Werten des zurückgelegten Wegs des Verbindungselements mittels einer hierzu am Verbindungssystem vorgesehenen Regeleinrichtung.

Die Anpresskraft und/ oder die Niederhaltekraft wird insbesondere mittels einer Regeleinrichtung mit kurzer Reaktionszeit geregelt. So kann die Regeleinrichtung beispielsweise mit einem die Anpresskraft ermittelnden Sensor und mit einem die Niederhaltekraft ermittelnden Sensor verbunden sein. Sobald der Eintritt des vorbestimmten Ereignisses erkannt wird, kann die Regeleinrichtung die Anpresskraft und die Niederhaltekraft verzögerungsfrei, insbesondere abrupt regeln. Gleichzeitig kann der zurückgelegte Weg des Niederhalters geregelt werden. Die Regeleinrichtung kann hierzu auch eine Speichereinheit aufweisen, in welcher vorbestimmte Werte für die Niederhaltekraft und die Anpresskraft gespeichert sind. Das Regeln der Niederhaltekraft kann auch rein mechanisch erfolgen. Insofern kann ein Niederhalter auch als mechanische Komponente, beispielsweise mit wenigstens einer Federeinrichtung und einer Rückfedersicherung ausgebildet sein. Insofern kann bei einer Bewegung der Führungseinrichtung der Niederhalter beaufschlagt werden und dadurch insbesondere entsprechend seiner Federkraft und dem Verfahrweg eine Niederhaltekraft aufbringen. Bei einem abrupten Rück- beziehungsweise Nachfedern der Führungseinrichtung und bei einem entsprechend abrupten Anstieg der Verlagerungsgeschwindigkeit des Verbindungselements, kann die Rückfedersicherung des Niederhalters einrasten, wodurch der Niederhalter zu einem starren Bauteil wird. In anderen Worten verhindert der Niederhalter, dass der Industrieroboter nachfedert und dadurch das Verbindungselement zu stark auf das wenigstens eine Werkstück presst.

Das abrupte Verringern der Anpresskraft bei Eintritt eines vorbestimmten Ereignisses kann innerhalb von 50 Millisekunden, innerhalb von 25 Millisekunden und insbesondere innerhalb von 5 Millisekunden nach Eintritt des vorbestimmten Ereignisses erfolgen. Insbesondere kann das abrupte Verringern der Anpresskraft bei Eintritt des vorbestimmten Ereignisses auch unmittelbar also ohne (messbare) Verzögerung erfolgen.

Auch das Erhöhen der Niederhaltekraft bei Eintritt eines vorbestimmten Ereignisses kann alternativ oder zusätzlich innerhalb von 50 Millisekunden, innerhalb von 25 Millisekunden und insbesondere innerhalb von 5 Millisekunden, nach Eintritt des vorbestimmten Ereignisses erfolgen. Insbesondere kann das Erhöhen der Niederhaltekraft auch unmittelbar, also abrupt/ verzögerungsfrei nach Eintritt des vorbestimmten Ereignisses geschehen. Insbesondere bei (rein) mechanischen Ausführungen des Niederhalters ist eine verzögerungsfreie Erhöhung vorgesehen. Bei einer Ausgestaltung des Niederhalters als mechanische Komponente, beispielsweise umfassend eine Rückfedersicherung, geschieht das Erhöhen der Niederhaltekraft durch diese Rückfedersicherung unmittelbar, also ohne (messbare) Verzögerung.

Zudem kann das Verbindungselement mittels eines an einem Werkzeughalter des Verbindungssystems angeordneten Verbindungswerkzeugs geführt werden, und das Verbindungswerkzeug nach dem Herstellen der Verbindung vom Verbindungselement getrennt werden, und, nachdem das Verbindungswerkzeug vom Verbindungselement getrennt wurde, kann der Niederhalter von dem wenigstens einen Werkstück getrennt werden. Durch die Trennung des Verbindungswerkzeugs von dem Verbindungselement nachdem die Verbindung hergestellt ist, kann vermieden werden, dass durch ein weiteres Verlagern des Verbindungselements durch das Verbindungswerkzeug die Verbindung beschädigt wird. So kann beispielsweise verhindert werden, dass durch ein Überdrehen eines als Schraube ausgebildeten Verbindungselements das Gewinde und/ oder die Schraube beschädigt wird. Weiterhin kann das Verbindungswerkzeug so wieder mit einem neuen Verbindungselement versehen werden. Dies kann beispielsweise vollautomatisch mittels eines entsprechenden Magazins für Verbindungselemente geschehen. Durch das Trennen der Verbindung zwischen Niederhalter und Werkstück kann das Verfahren beendet und ein gefahrloses Verlagern der Verbindungseinheit, beispielsweise zu einer nächsten Verbindungsstelle, ermöglicht werden.

In einem weiteren Aspekt betrifft die Erfindung weiterhin ein Verbindungssystem zur Herstellung einer Verbindung zwischen wenigstens einem Werkstück und einem Verbindungselement umfassend
- eine Verbindungseinheit mit einem Linearantrieb und einem Werkzeughalter zur Aufnahme eines Verbindungswerkzeugs; und
- eine Führungseinrichtung, insbesondere einen Industrieroboter an welcher die Verbindungseinheit angeordnet ist;
   wobei das Verbindungssystem zur Ausführung wenigstens einer Ausführungsform des vorausgehend beschriebenen Verfahrens ausgebildet ist, wobei
- ein Niederhalter zum Niederhalten des wenigstens einen Werkstücks vorgesehen ist, und wobei
- der Niederhalter einen Niederhalteraktuator aufweist, welcher zum Aufbringen und zum Ändern einer Niederhaltekraft auf das wenigstens eine Werkstück ausgebildet ist.

Ein als Industrieroboter ausgebildetes Verbindungssystem kann auch als industrieller Manipulator oder als Handhabungssystem bezeichnet werden. Beispielsweise kann ein Industrieroboter als ein Gelenkroboterarm, ein Portalroboter, ein SCARA, ein 7-Achs-Knickarmroboter, ein Delta-Roboter oder ein Hexapod-Roboter ausgebildet sein.

Ein Niederhalter kann beispielsweise zweiteilig mit einem Niederhalterkopf und einem Aktuator ausgebildet sein. Ein Aktuator kann entsprechend auch als Niederhalteraktuator bezeichnet werden. Ein Niederhalterkopf wird bei dem erfindungsgemäßen Verfahren auf einem Werkstück positioniert und mittels des Niederhalteraktuators wird durch den Niederhalterkopf eine Niederhaltekraft auf das Werkstück bzw. bei übereinander angeordneten Werkstücken auf die Werkstücke aufgebracht. Es können auch mehrere Niederhalter vorgesehen sein, welche insbesondere symmetrisch um eine Werkzeugaufnahme herum angeordnet sind. Ein Niederhalteraktuator kann beispielsweise mit einer pneumatischen, hydraulischen oder elektromotorischen Funktionsweise ausgebildet sein. Weiterhin kann ein Niederhalter auch als mechanische Komponente, beispielsweise umfassend eine Feder mit einer Rückfedersicherung ausgebildet sein. Ein Niederhalteraktuator kann in diesem Falle beispielsweise als Rückfedersicherung ausgebildet sein. Insofern kann bei einem Verfahren der Führungseinrichtung der Niederhalter gestaucht werden und dadurch entsprechend seiner Federkraft und dem Verfahrweg eine Niederhaltekraft aufbringen. Bei einem abrupten Rückfedern der Führungseinrichtung, also bei einem abrupten Anstieg der Verfahrgeschwindigkeit des Verbindungselements, kann die Rückfedersicherung einrasten, wodurch der Niederhalter zu einem steifen bzw. starren Bauteil wird. In anderen Worten verhindert der Niederhalter, dass die Führungseinrichtung nachfedert und dadurch das Verbindungselement zu stark beschleunigt wird.

An der Verbindungseinheit kann ein positionierbares Auflageelement angeordnet sein. Insbesondere kann die Niederhalterkraft mittelbar auf das Auflageelement wirken. In anderen Worten können Auflageelement und Niederhalter übereinander oder aufeinander liegen und nur durch das wenigstens eine Werkstück voneinander getrennt sein. Dabei drückt der Niederhalter mit der Niederhaltekraft mittelbar über das wenigstens eine Werkstück auf das Auflageelement, sodass das wenigstens eine Werkstück nicht durch den Niederhalter verformt wird. Ein Auflageelement kann insbesondere flächig ausgeführt sein. Weiterhin kann ein Auflageelement insofern zusammen mit dem Verbindungselement verfahren bzw. bewegt werden. In einem Beispiel kann ein Auflageelement zudem ein Gegenstück für das Verbindungselement sein oder ein Gegenstück für das Verbindungselement umfassen. Insofern kann ein Gegenstück beispielsweise zur Endformgebung des Verbindungselements dienen. Ein Gegenstück kann auch als Gegenhalter oder Nietkopfsetzer oder Schließkopfformer bezeichnet werden.

An der Verbindungseinheit kann ein Rotationsantrieb angeordnet sein. Ein Verbindungselement kann beispielsweise in den Schritten c) und f) des vorgeschlagenen Verfahrens mittels eines Rotationsantriebs um seine Rotationsachse rotiert werden. Ein solcher Rotationsantrieb rotiert das Verbindungselement zusätzlich zur linearen Bewegung. Vorteilhafterweise kann bei einem als selbstformende Schraube ausgebildeten Verbindungselement mittels der Rotation der Schraube um ihre Rotationsachse ein Gewinde in dem wenigstens einen Werkstück bzw. in den Werkstücken geschnitten werden. Anschließend kann die Schraube mittels der Rotation in diesem Gewinde bis zu einem gewünschten Drehmoment angezogen werden. Ein Rotationsantrieb kann beispielsweise eine pneumatische, hydraulische oder elektromotorische Funktionsweise aufweisen. Weiterhin kann mittels eines derartigen Rotationsantriebs ebenfalls die Rotationsgeschwindigkeit bzw. Drehzahl des rotierenden Verbindungselements ermittelt werden.

Ferner kann eine Regeleinrichtung vorgesehen sein, welche zum Regeln des Linearantriebs, eines Rotationsantriebs und/ oder des Niederhalteraktuators ausgebildet sein kann. Vorteilhafterweise kann eine Regeleinrichtung abrupt bzw. mit kurzer Reaktionszeit die Anpresskraft und die Niederhaltekraft regeln. Insoweit kann die Regeleinrichtung beispielsweise mit einem die Anpresskraft ermittelnden Sensor und mit einem die Niederhaltekraft ermittelnden Sensor verbunden sein. Sobald der Eintritt des vorbestimmten Ereignisses erkannt wird, kann die Regeleinrichtung nahezu unmittelbar, oder in anderen Worten abrupt, die Anpresskraft und die Niederhaltekraft entsprechend dem vorgeschlagenen Verfahren regeln. Die Regeleinrichtung kann hierzu auch eine Speichereinheit aufweisen, in welcher vorbestimmte Werte für Niederhaltekraft und Anpresskraft gespeichert sind. Die Regeleinrichtung kann zudem auch einen Rotationsantrieb regeln und entsprechend mit diesem verbunden sein.

Im Folgenden werden in den Figuren dargestellte Ausführungsbeispiele der Erfindung erläutert. Es zeigt:
- Fig. 1: Eine beispielhafte schematische Darstellung eines Verfahrens zum Herstellen einer Verbindung,
- Fig. 2: eine schematische Darstellung eines beispielhaften Verbindungssystems,
- Fig. 3A: eine schematische Darstellung eines beispielhaften Verbindungssystems im Verlauf eines beispielhaften Verfahrens zur Herstellung einer Verbindung,
- Fig. 3B: eine weitere schematische Darstellung eines beispielhaften Verbindungssystems im Verlauf eines beispielhaften Verfahrens zur Herstellung einer Verbindung, und
- Fig. 3C: eine noch weitere schematische Darstellung eines beispielhaften Verbindungssystems im Verlauf eines beispielhaften Verfahrens zur Herstellung einer Verbindung.

In allen Figuren werden für gleiche bzw. gleichartige Bauteile übereinstimmende Bezugszeichen verwendet.

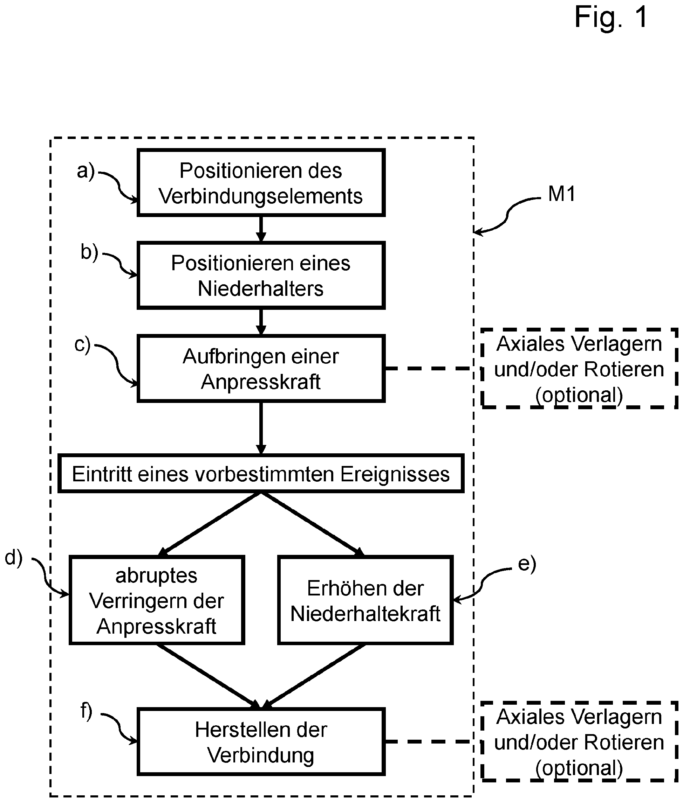

**Fig. 1** zeigt eine beispielhafte schematische Darstellung eines Verfahrens M1 zur Herstellung einer Verbindung zwischen wenigstens einem Werkstück 1 und einem Verbindungselement 2 mittels eines Verbindungssystems 3. Ein derartiges Verbindungssystem 3 kann mit einer Verbindungseinheit 4 und einer Führungseinrichtung 5 wie einem Industrieroboter, beispielsweise einem Gelenkarmroboter, durchgeführt werden. Das Verbindungselement 2 kann dabei an einem Verbindungswerkzeug 6 der Verbindungseinheit 4 angeordnet sein und die Verbindungseinheit 4 an einer Aufnahme 7 der Führungseinrichtung 5 angeordnet sein.

In einem (ersten) Schritt a) wird das Verbindungselement 2 an einem ersten Werkstück 1a positioniert. Hierbei kann beispielsweise die gesamte Verbindungseinheit 4 durch die Führungseinrichtung 5 derart verfahren werden, dass das Verbindungselement 2 an dem ersten Werkstück 1a anliegt. Das Verbindungselement 2 kann beispielsweise an einem Verbindungswerkzeug 6, beispielsweise an einem Rotations- bzw. Drehwerkzeug, angeordnet sein. Das Verbindungswerkzeug 6 hingegen kann in einem Werkzeughalter 8 an der Verbindungseinheit 4 angeordnet sein.

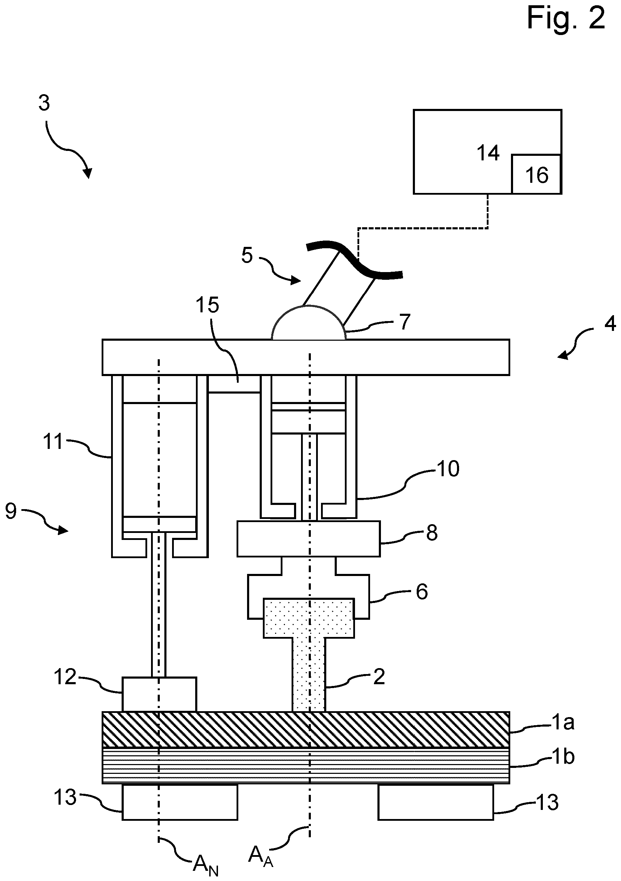

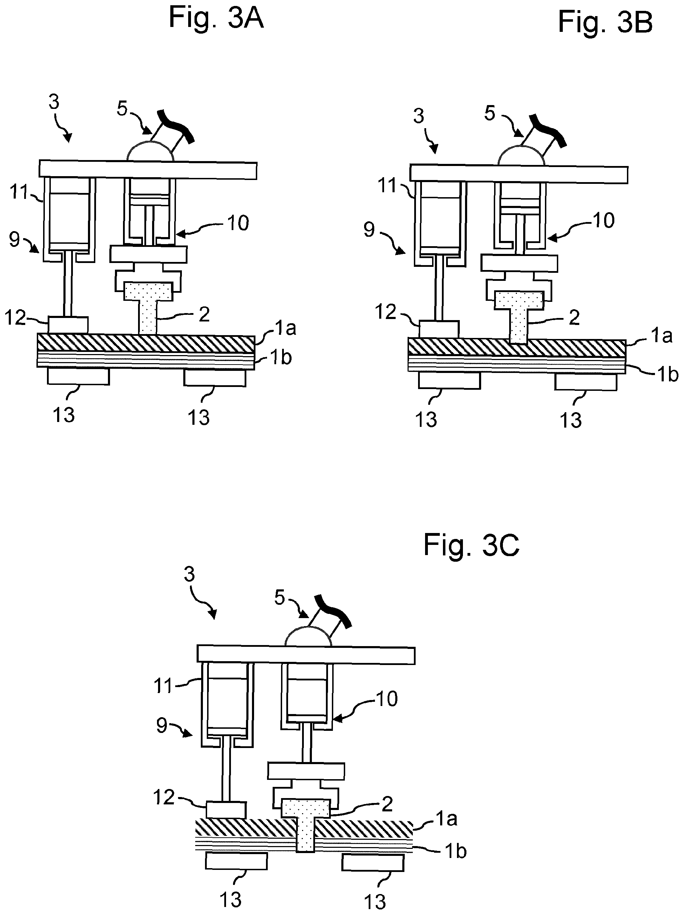

In einem weiteren Schritt b) wird ein Niederhalter 9 an dem Werkstück 1a positioniert und eine Niederhaltekraft aufgebracht. Der Niederhalter 9 kann beispielsweise ebenfalls an der Verbindungseinheit 4 angeordnet sein. In den schematischen Figuren 2, 3A - 3C ist jeweils nur ein Niederhalter 9 dargestellt. Es versteht sich, dass mehrere, insbesondere symmetrisch zu dem wenigstens einen Werkstücken 1a, 1b mehrere Niederhalter 9 vorgesehen sein können. Durch den Niederhalter 9 wird eine Niederhaltekraft auf das Werkstück 1a aufgebracht, wodurch einerseits das Werkstück 1a fixiert wird. Im Falle von beispielsweise bei zwei übereinander angeordneten Werkstücken 1a und 1b, wie in den Figuren 2 und 3 gezeigt, werden die beiden Werkstücke 1a und 1b aneinandergedrückt. Die Niederhaltekraft und die Anpresskraft wirken dabei entlang parallel zueinander angeordneter Achsen A_{N}, A_{A}. Es sind auch Ausführungen möglich, bei welchen s bestünde die Möglichkeit, dass die Schraubenspitze im Niederhalter ist, bzw. aus diesem heraussteht

Anschließend wird in einem Schritt c) eine Anpresskraft auf das Werkstück 1a durch das Verbindungselement 2 aufgebracht. Mittels dieser Anpresskraft wird das Verbindungselement 2 in das Werkstück 1a bzw. in die wenigstens zwei Werkstücke 1a und 1b eingebracht. Die Anpresskraft kann beispielsweise axial mittels eines Linearantriebs 10 aufgebracht werden. Optional kann hierbei das Verbindungselement 2 axial verlagert und/ oder rotiert werden. Vorteilhafterweise kann bei einem als selbstformende Schraube ausgebildeten Verbindungselement 2 mittels einer Rotation der Schraube um ihre Rotationsachse ein Gewinde in dem Werkstück 1a bzw. in den Werkstücken 1a und 1b geschnitten werden. Durch die Anpresskraft und ebenfalls durch die Rotation der Schraube, bzw. des Verbindungselements 2, wird die Schraube in das erste Werkstück 1a und abhängig von der Ausführung in das zweite Werkstück 1b eingebracht.

Bei Eintritt eines vorbestimmten Ereignisses wird in Schritt d) die Anpresskraft abrupt reduziert. Ein solches vorbestimmtes Ereignis kann beispielsweise das Eindringen des Verbindungselements 2 in das Werkstück 1a sein. Würde bei Eindringen des Verbindungselements 2 in das Werkstück 1a die Anpresskraft nicht reduziert, so würde das Verbindungselement 2 bei der beispielhaften Ausführung zu stark beschleunigt werden, da die Widerstandskraft des Materials des Werkstücks 1a ab Eintritt dieses Ereignisses geringer ist als zuvor. Die Anpresskraft wird insofern abrupt auf einen geringeren Wert reduziert, welcher insbesondere abhängig von dem Material des Werkstücks auszuwählen ist.

Bei Eintritt des vorbestimmten Ereignisses, insbesondere einem Eindringen des Verbindungselements 2 in das Werkstück 1a, wird die Niederhaltekraft in Schritt e) erhöht. Durch das Erhöhen der Niederhaltekraft wird ein Zurückfedern der Führungseinrichtung 5 verhindert. Insofern können die durch die Führungseinrichtung 5 auf das Verbindungselement 2 ausgeübten Rückstellkräfte durch den Niederhalter 9 bzw. durch die Niederhaltekraft ausgeglichen werden. In anderen Worten verhält sich das System durch das Verfahren M1 wie ein starres System. Die Erhöhung der Niederhaltekraft kann beispielsweise mittels eines Niederhalteraktuators 11, beispielsweise hydraulisch oder elektromotorisch erfolgen. Die Erhöhung der Niederhalterkraft wird derart durchgeführt, dass die Summe aus Anpresskraft und Niederhaltekraft nach Eintritt des vorbestimmten Ereignisses im Wesentlichen der Summe aus Anpresskraft und Niederhaltekraft vor Eintritt des vorbestimmten Ereignisses entspricht. In anderen Worten wird bei einer Erhöhung der Niederhaltekraft beispielsweise mittels eines Niederhalteraktuators 11 die Niederhaltekraft insbesondere auf einen Wert erhöht, welcher der unmittelbar vor dem vorbestimmten Ereignis aufgebrachten Anpresskraft entspricht. Insofern bleibt das System aus Werkstück 1a, Niederhalter 9, Verbindungselement 2 und Führungseinrichtung 5 in einem Kräftegleichgewicht. Es erfolgt daher kein unerwünschtes Rückfedern der Führungseinrichtung 5 und insbesondere wird das Verbindungselement 2 nicht übermäßig stark in Richtung des Werkstücks 1a beschleunigt.

Abschließend kann in Schritt f) eine sichere und dauerfeste Verbindung des Verbindungselements 2 mit dem Werkstück 1a bzw. mit dem Werkstück 1b hergestellt werden. Optional kann hierbei das Verbindungselement 2 axial verlagert und/oder rotiert werden. Vorteilhafterweise kann bei einem als selbstformende Schraube ausgebildeten Verbindungselement 2 mittels einer Rotation der Schraube um ihre Rotationsachse ein Gewinde in dem Werkstück 1a bzw. 1b geschnitten werden. Hierbei wird durch die Rotation der Schraube bzw. des Verbindungselements 2 ein Gewinde in dem Werkstück 1a bzw. 1b erzeugt. Abschließend kann die Schraube mittels der Rotation in diesem Gewinde bis zu einem gewünschten Drehmoment angezogen werden.

**Fig. 2** sowie ebenfalls die Figuren Fig. 3A, Fig. 3B und Fig. 3C zeigt beziehungsweise zeigen eine schematische Darstellung eines beispielhaften Verbindungssystems 3. Das gezeigte Verbindungssystem 3 ist zur Herstellung einer Verbindung zwischen wenigstens einem Werkstück 1a, 1b und einem Verbindungselement 2 ausgebildet. Das Verbindungssystem 3 weist eine Verbindungseinheit 4 mit einem Linearantrieb 10 und einem Werkzeughalter 8 zur Aufnahme eines Verbindungswerkzeugs 6 auf. Weiterhin weist das Verbindungssystem 3 eine Führungseinrichtung 5 auf, an welcher die Verbindungseinheit 4 angeordnet ist. Die Führungseinrichtung 5 ist in den Figuren 2, 3A, 3B und 3C lediglich teilweise dargestellt, nämlich mit dem abschließenden Glied welches bei der dargestellten Ausführung eine als Gelenk ausgebildete Aufnahme 7 zur Aufnahme der Verbindungseinheit 4 aufweist. An der Verbindungseinheit 4 ist weiterhin ein Niederhalter 9 zum Niederhalten der Werkstücke 1a und 1b vorgesehen. Der Niederhalter 9 weist einen Niederhalteraktuator 11 auf, welcher zum Aufbringen und zum Ändern einer Niederhaltekraft auf die Werkstücke 1a und 1b ausgebildet ist.

Der gezeigte Niederhalter 9 ist zweiteilig mit einem Niederhalterkopf 12 und einem Niederhalteraktuator 11 ausgebildet. Der Niederhalterkopf 12 ist auf dem ersten Werkstück 1a positioniert und mittels des Niederhalteraktuators 11 wird durch den Niederhalterkopf 12 eine Niederhaltekraft auf das Werkstück 1a bzw. auf die Werkstücke 1a und 1b aufgebracht. Es können in einer anderen Ausführung auch mehrere Niederhalter 12 vorgesehen sein, welche insbesondere symmetrisch um den Werkzeughalter 8 herum angeordnet sind. Ein Niederhalteraktuator 11 kann beispielsweise mit einer pneumatischen, hydraulischen oder elektromotorischen Funktionsweise ausgebildet sein. Ein Niederhalteraktuator 11 kann ebenfalls als Feder beziehungsweise als Rückfedersicherung ausgestaltet sein. Insofern kann ein derart ausgestalteter Niederhalteraktuator bei einem Rückfedern der Führungseinrichtung 5 den Niederhalter "starr" schalten, sodass dieser die Rückfederkraft des Industrieroboters direkt als Niederhaltekraft weiterleitet bzw. aufbringt.

Die Verbindungseinheit 4 weist überdies zwei positionierbare Auflageelemente 13 auf. Die Niederhaltekraft wirkt mittelbar auf ein Auflageelement 13. In anderen Worten liegen wenigstens ein Auflageelement 13 und ein Niederhalter 9, insbesondere der Niederhalterkopf 12, übereinander bzw. aufeinander und sind nur durch die Werkstücke 1a und 1b voneinander getrennt. Dabei drückt der Niederhalter 9 mit der Niederhaltekraft mittelbar über die Werkstücke 1a und 1b auf das Auflageelement 13, sodass die Werkstücke 1a und 1b nicht durch den Niederhalter 9 verformt werden. Die Auflageelemente 13 sind, gleichwohl dies in den Figuren nicht gezeigt ist, an der Verbindungseinheit 4 angeordnet und können insofern zusammen mit der Verbindungseinheit 4 und daher mit dem Verbindungselement 2 verfahren bzw. bewegt werden.

Weiterhin ist an der Verbindungseinheit 4, und darüber mittelbar ebenfalls an der Führungseinrichtung 5, ein Linearantrieb 10 angeordnet. Der Linearantrieb 10 kann beispielsweise eine pneumatische, hydraulische oder elektromotorische Funktionsweise aufweisen. Mittels des Linearantriebs 10 kann die Anpresskraft auf das Verbindungselement 2 aufgebracht werden. Weiterhin kann mittels des Linearantriebs 10 das Verbindungselement 2 axial verlagert werden und in das Werkstück 1a bzw. in das Werkstück 1b eingebracht werden, ohne hierfür die Verbindungseinheit 4 oder die Führungseinrichtung 5 verfahren zu müssen. Zudem kann mittels des Linearantriebs 10 der zurückgelegte Weg des Verbindungselements 2 ermittelt werden.

Die Figuren Fig. 3A, Fig. 3B und Fig. 3C zeigen jeweils eine schematische Darstellung eines beispielhaften Verbindungssystems 3 im Verlauf eines beispielhaften Verfahrens M1 zur Herstellung einer Verbindung.

Dabei zeigt **Fig. 3A** den Zustand des Verbindungssystems 3 nach Abschluss des Schrittes c). Dabei ist das Verbindungselement 2 an dem Werkstück 1a angeordnet, der dargestellte Niederhalter 9 ist mit einem Niederhalterkopf 12 an dem Werkstück 1a angeordnet und direkt über dem linken Auflageelement 13 positioniert. Sowohl eine Anpresskraft als auch eine Niederhaltekraft ist aufgebracht, jedoch hat noch keine axiale Verlagerung des Verbindungselements 2 stattgefunden und insofern ist das Verbindungselement 2 noch nicht in das Werkstück 1a eingedrungen. Obwohl in Fig. 3A nicht dargestellt ist es möglich, dass aufgrund der Anpresskraft bzw. der Niederhaltekraft die Führungseinrichtung 5 etwas verlagert wird, während diese durch die anliegenden Kräfte wie eine Feder gespannt wird.

**Fig. 3B** zeigt den Zustand des Verbindungssystems 3 nach Abschluss des Schritts e). Zwischen dem in Fig. 3A gezeigten Zustand und dem in Fig. 3B gezeigten Zustand ist das vorbestimmte Ereignis eingetreten und das Verbindungselement 2 ist in das Werkstück 1a eingedrungen und dabei unter Eintritt einer beginnenden unerwünschten Beschleunigung verlagert worden. Bei Eintritt dieses vorbestimmten Ereignisses wurde die Anpresskraft abrupt reduziert und die Niederhaltekraft erhöht, wobei die Niederhaltekraft derart erhöht wurde, dass die Summe aus Anpresskraft und Niederhaltekraft nach Eintritt des vorbestimmten Ereignisses im Wesentlichen der Summe aus Anpresskraft und Niederhaltekraft vor Eintritt des vorbestimmten Ereignisses entspricht. Beispielsweise wurde die Niederhaltekraft auf einen Wert erhöht, welcher der unmittelbar vor dem vorbestimmten Ereignis aufgebrachten Anpresskraft entspricht. Durch das unmittelbare Reduzieren der Anpresskraft wurde verhindert, dass das Verbindungselement 2 weiter in Richtung auf das Werkstück 1a beschleunigt wird. Durch das Erhöhen der Niederhaltekraft wurde ein Zurückfedern der Führungseinrichtung 5 verhindert. Insofern können die durch die Führungseinrichtung 5 auf das Verbindungselement 2 ausgeübten Rückstellkräfte durch den Niederhalter 9 bzw. durch die Niederhaltekraft ausgeglichen werden. In anderen Worten verhält sich das Verbindungssystem 2 wie ein starres System. Die Niederhaltekraft kann beispielsweise mittels einer in Fig. 2 dargestellten Regeleinrichtung 14 erhöht worden sein. Insoweit kann die Regeleinrichtung 14 beispielsweise mit einem die Anpresskraft ermittelnden Sensor 15 (Fig. 2) und mit einem, die Niederhaltekraft ermittelnden Sensor 15 (Fig. 2) verbunden sein. Alternativ oder zusätzlich kann die Regeleinrichtung 14 den Eintritt des vorbestimmten Ereignisses mittels des Linearantriebs 10 erkennen, da dieser beispielsweise eine Verlagerung des Verbindungselements 2 bei Eintritt des Verbindungselements 2 in das Werkstück 1a an die Regeleinrichtung übermitteln kann. Sobald der Eintritt des vorbestimmten Ereignisses erkannt wird, kann die Regeleinrichtung nahezu direkt, oder in anderen Worten abrupt, die Anpresskraft und die Niederhaltekraft regeln. Beispielsweise kann die Regeleinrichtung 14 den Linearantrieb 10 und den Niederhalteraktuator 11 regeln. Die Regeleinrichtung 14 kann hierzu auch eine, ebenfalls in Fig. 2 dargestellte Speichereinheit 16 aufweisen, in welcher vorbestimmte Werte für Niederhaltekraft und Anpresskraft gespeichert sind.

**Fig. 3C** zeigt den Zustand des Verbindungssystems 3 nach Abschluss des Schrittes f). Zwischen dem in Fig. 3B gezeigten Zustand und dem in Fig. 3C gezeigten Zustand ist bei reduzierter Anpresskraft und erhöhter Niederhaltekraft das Verbindungselement 2 weiter verlagert worden und hat sowohl das Werkstück 1a als auch das Werkstück 1b vollständig durchdrungen. Insofern ist eine Verbindung der beiden Werkstücke 1a und 1b durch das Verbindungselement 2 hergestellt worden.

### Bezugszeichenliste

- 1a: Erstes Werkstück
- 1b: Zweites Werkstück
- 2: Verbindungselement
- 3: Verbindungssystem
- 4: Verbindungseinheit
- 5: Führungseinrichtung
- 6: Verbindungswerkzeug
- 7: Aufnahme (der Verbindungseinheit an der Führungseinrichtung)
- 8: Werkzeughalter
- 9: Niederhalter
- 10: Linearantrieb
- 11: Niederhalteraktuator
- 12: Niederhalterkopf
- 13: Auflageelement
- 14: Regeleinrichtung
- 15: Sensor
- 16: Speichereinheit

- A_{A}: Anpresskraftachse
- A_{N}: Niederhalterkraftachse

## Patentansprüche

1. Verfahren (M1) zum Herstellen einer Verbindung zwischen wenigstens einem Werkstück (1a, 1b) und einem Verbindungselement (2) mittels eines Verbindungssystems (3), wobei das Verfahren (M1) die folgenden Schritte umfasst:
a) Positionieren des Verbindungselements (2) an dem wenigstens einen Werkstück (1a, 1b),
b) Positionieren eines Niederhalters (9) an dem wenigstens einen Werkstück (1a, 1b) und Aufbringen einer vorbestimmten Niederhaltekraft,
c) Aufbringen einer vorbestimmten Anpresskraft auf das wenigstens eine Werkstück (1a, 1b) durch das Verbindungselement (2), wobei die Niederhaltekraft und die Anpresskraft entlang parallel zueinander angeordneter Achsen (A_{N}, A_{A}) wirken,
d) abruptes Verringern der Anpresskraft bei Eintritt eines vorbestimmten Ereignisses, wobei die Anpresskraft auf einen vorbestimmten Wert verringert wird,
e) Erhöhen der Niederhaltekraft bei Eintritt des vorbestimmten Ereignisses, wobei die Niederhaltekraft derart erhöht wird, dass die Summe aus Anpresskraft und Niederhaltekraft nach Eintritt des vorbestimmten Ereignisses im Wesentlichen der Summe aus Anpresskraft und Niederhaltekraft vor Eintritt des vorbestimmten Ereignisses entspricht,
f) Herstellen der Verbindung durch das Verbindungselement (2).

2. Verfahren (M1) nach Anspruch 1, **dadurch gekennzeichnet, dass** der Niederhalter (9) im Schritt b) derart positioniert wird, dass das wenigstens eine Werkstück (1a, 1b) sandwichartig zwischen dem Niederhalter (9) und einem Auflageelement (13) angeordnet ist.

3. Verfahren (M1) nach wenigstens einem der vorhergehenden Ansprüche, **dadurch gekennzeichnet, dass** das Verbindungselement (2) in wenigstens einem der Schritte c) und f) mittels eines Linearantriebs (10) verlagert wird.

4. Verfahren (M1) nach wenigstens einem der vorhergehenden Ansprüche, **dadurch gekennzeichnet, dass** das Verbindungselement (2) in wenigstens einem der Schritte c) und f) mittels eines Rotationsantriebs um seine Rotationsachse (A_{A}) rotiert wird.

5. Verfahren (M1) nach wenigstens einem der vorhergehenden Ansprüche, **dadurch gekennzeichnet, dass** während der Durchführung wenigstens eines der Schritte des Verfahrens:
g1) die Anpresskraft und/ oder ein vom Verbindungselement (2) gegenüber dem wenigstens einen Werkstück (1a, 1b) zurückgelegter Weg mittels wenigstens einem hierzu am Verbindungssystem (3) vorgesehenen Sensors (15), und/ oder mittels Berechnung aus an dem die Anpresskraft aufbringenden Aktuator verfügbaren Werten und/ oder
g2) die Niederhaltekraft und/ oder der vom Niederhalter (9) gegenüber dem Verbindungssystem (3) zurückgelegte Weg mittels wenigstens einem hierzu am Verbindungssystem (3) vorgesehenen Sensors (15), und/ oder mittels Berechnung aus an dem die Niederhaltekraft aufbringenden Niederhalteraktuator (11) verfügbaren Werten ermittelt wird.

6. Verfahren (M1) nach dem vorhergehenden Anspruch, **gekennzeichnet durch** wenigstens einen der folgenden Schritte:
h1) Regeln der Anpresskraft abhängig von ermittelten Werten der Anpresskraft bzw. ermittelten Werten des zurückgelegten Wegs des Verbindungselements (2) mittels einer hierzu am Verbindungssystem (3) vorgesehenen Regeleinrichtung (14), und/ oder
h2) Regeln der Niederhaltekraft und/ oder den vom Niederhalter (9) zurückgelegten Weg abhängig von ermittelten Werten der Niederhaltekraft bzw. ermittelten Werten des zurückgelegten Wegs des Verbindungselements (2) mittels einer hierzu am Verbindungssystem (3) vorgesehenen Regeleinrichtung (14).

7. Verfahren (M1) nach wenigstens einem der vorhergehenden Ansprüche, **wobei**
- das abrupte Verringern der Anpresskraft bei Eintritt eines vorbestimmten Ereignisses innerhalb von 50 Millisekunden, insbesondere innerhalb von 25 Millisekunden und insbesondere innerhalb von 5 Millisekunden, oder unmittelbar, also ohne messbare Verzögerung nach Eintritt des vorbestimmten Ereignisses erfolgt, und/ oder
- das Erhöhen der Niederhaltekraft bei Eintritt eines vorbestimmten Ereignisses innerhalb von 50 Millisekunden, insbesondere innerhalb von 25 Millisekunden und insbesondere innerhalb von 5 Millisekunden, oder unmittelbar, also ohne messbare Verzögerung nach Eintritt des vorbestimmten Ereignisses erfolgt.

8. Verfahren (M1) nach wenigstens einem der vorhergehenden Ansprüche, **wobei**
- das Verbindungselement (2) mittels eines an einem Werkzeughalter (8) des Verbindungssystems (3) angeordneten Verbindungswerkzeugs (6) geführt wird, und
- das Verbindungswerkzeug (6) nach dem Herstellen der Verbindung vom Verbindungselement (2) getrennt wird, und
- nachdem das Verbindungswerkzeug (6) vom Verbindungselement (2) getrennt wurde, der Niederhalter (9) von dem wenigstens einen Werkstück (1a, 1b) getrennt wird.

9. Verbindungssystem (3) zur Herstellung einer Verbindung zwischen wenigstens einem Werkstück (1a, 1b) und einem Verbindungselement (2) umfassend
- eine Verbindungseinheit (4) mit einem Linearantrieb (10) und einem Werkzeughalter (8) zur Aufnahme eines Verbindungswerkzeugs (6); und
- eine Führungseinrichtung (5), insbesondere einen Industrieroboter, an welchem die Verbindungseinheit (4) angeordnet ist;
wobei das Verbindungssystem (3) zur Ausführung eines Verfahrens (M1) nach einem der vorhergehenden Ansprüche ausgebildet ist und **dadurch gekennzeichnet ist, dass**
- ein Niederhalter (9) zum Niederhalten des wenigstens einen Werkstücks (1a, 1b) vorgesehen ist, und dass
- der Niederhalter (9) einen Niederhalteraktuator (11) aufweist, welcher zum Aufbringen und zum Ändern einer Niederhaltekraft auf das wenigstens eine Werkstück (1a, 1b) ausgebildet ist.

10. Verbindungssystem (3) nach Anspruch 9, **dadurch gekennzeichnet, dass** an der Verbindungseinheit (4) ein positionierbares Auflageelement (13) angeordnet ist.

11. Verbindungssystem (3) nach wenigstens einem der Ansprüche 9 oder 10, **dadurch gekennzeichnet, dass** an der Verbindungseinheit (4) ein Rotationsantrieb angeordnet ist.

12. Verbindungssystem (3) nach wenigstens einem der Ansprüche 9 bis 11, **dadurch gekennzeichnet, dass** eine Regeleinrichtung (14) vorgesehen ist, welche zum Regeln des Linearantriebs (10), des Rotationsantriebs und/ oder des Niederhalteraktuators (11) ausgebildet ist.
